Europäisches Patentamt

European Patent Office

Office européen des brevets

(11) Numéro de publication: **0 323 927 B1**

# FASCICULE DE BREVET EUROPEEN

(45) Date de publication de fascicule du brevet: **20.10.93** (51) Int. Cl.⁵: **H04B 7/015**

(21) Numéro de dépôt: **89400011.6**

(22) Date de dépôt: **03.01.89**

(54) **Procédé et dispositif de démodulation de données numériques transmises en évasion de fréquence sur un canal de transmission ionosphérique.**

(30) Priorité: **08.01.88 FR 8800138**

(43) Date de publication de la demande:
**12.07.89 Bulletin 89/28**

(45) Mention de la délivrance du brevet:
**20.10.93 Bulletin 93/42**

(84) Etats contractants désignés:
**DE GB IT**

(56) Documents cités:
**EP-A- 0 236 558**
**US-A- 4 328 585**

**PROCEEDINGS OF THE IEEE, vol. 68, no. 3, mars 1980, pages 328-353, IEEE, New York, US; G.L. TURIN: "Introduction to spread-spectrum antimultipath techniques and their application to urban digital radio"**

(73) Titulaire: **THOMSON-CSF**
**51, Esplanade du Général de Gaulle**
**F-92800 Puteaux(FR)**

(72) Inventeur: **Thibault, Joel**
**THOMSON-CSF**
**SCPI**
**19, avenue de Messine**
**F-75008 Paris(FR)**
Inventeur: **Monsen, Peter**
**THOMSON-CSF**
**SCPI**
**19, avenue de Messine**
**F-75008 Paris(FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

Rank Xerox (UK) Business Services
(3.10/3.6/3.3.1)

## Description

La présente invention concerne un procédé et un dispositif de démodulation de données numériques transmises en évasion de fréquence sur un canal de transmission ionosphérique.

Les techniques connues de démodulation adaptées aux liaisons ionosphériques en évasion de fréquence se divisent en deux catégories. Une première catégorie concerne les techniques de faible complexité mettant en oeuvre des modulateurs démodulateurs connus sous la désignation MFSK ou encore des modulateurs travaillant sur des multi-sous-porteuses.

Ces techniques conduisent à des réalisations qui résistent généralement assez bien aux perturbations introduites par les multitrajets des ondes radioélectriques. En contrepartie elles nécessitent des vitesses de modulation faibles pour que le traînage d'un symbole sur l'autre soit relativement faible en regard de la durée de chaque symbole. Elles ont également l'inconvénient d'être sous optimales en ce qui concerne le bilan de liaison puisque les portions de symboles affectées d'interférences ne sont pas utilisées en démodulation. D'autre part, l'inconvénient des procédés de modulation à multi-sous-porteuses apparaît clairement par le facteur crête élevé qui empêche une utilisation de l'émetteur à son rendement maximal.

La deuxième catégorie concerne les techniques de grande complexité. Celles-ci mettent en oeuvre différents algorithmes d'égalisation adaptative pour réaliser un filtrage inverse de celui propre au canal sans qu'aucune hypothèse restrictive sur le type de canal ne soit faite. Un mode de réalisation de ces techniques est par exemple décrit dans le brevet US 4 365 338 ayant pour titre "Technic for digital transmission over dynamic dispersive channel". Cependant l'inconvénient de ces techniques apparaît dans le coût en calcul impliqué par l'entretien permanent (réactualisation au rythme symboles) des gains d'un égaliseur dont la non spécificité entraîne la détermination d'un grand nombre de coefficients a priori tous inconnus.

Le but de l'invention est de pallier les inconvénients précités.

A cet effet, l'invention a pour objet, un procédé de démodulation de données numériques transmises en évasion de fréquence sur un canal de transmission ionosphérique caractérisé en ce qu'il consiste :
- à estimer le nombre de trajets par leurs retards moyens dans la bande d'étalement des signaux en évasion de fréquence,
- à effectuer un premier filtrage sur les échantillons du palier reçu adapté à la modulation et au canal de transmission,
- à effectuer un deuxième filtrage consistant :
  - à annuler les interférences dues aux symboles déjà démodulés,
  - à annuler les interférences dues aux symboles non encore démodulés,
    et à déterminer à partir des résultats du deuxième filtrage le symbole émis le plus probable.

L'invention a également pour objet un dispositif pour la mise en oeuvre du procédé précité.

D'autres caractéristiques et avantages de l'invention apparaîtront ci-après à l'aide de la description qui suit faite en regard des dessins ci-annexés qui représentent :
- La figure 1 la structure d'un palier EVF ;
- la figure 2 un schéma fonctionnel représentatif du procédé et du dispositif selon l'invention ;
- la figure 3 un mode de réalisation du filtre adapté à la modulation et au canal de la figure 2 ;
- la figure 4 un mode de réalisation du filtre pour annuler les interférences dues aux symboles déjà démodulés de la figure 2 ;
- la figure 5 un mode de réalisation du filtre pour annuler les interférences dues aux symboles non encore démodulés de la figure 2 ;
- la figure 6 un organigramme montrant un processus de détermination des coefficients de l'égaliseur de la figure 2 ;
- la figure 7 un mode de réalisation du circuit permettant le choix du symbole qui a l'énergie la plus faible de la figure 2.

Le procédé de démodulation selon l'invention qui est décrit ci-après a pour fonction de démoduler un signal modulé en phase de type connu sous la désignation PSK qui est l'abréviation du terme anglo-saxon Phase Shift Keying, ce signal étant transmis en évasion de fréquence sur un canal multitrajets dans les hypothèses où, les retards de chacun des différents trajets s'étalent au maximum suivant une durée relativement faible de l'ordre de 500 microsecondes par exemple. Les positions moyennes de ces retards sont acquises préalablement pour être ensuite fournies à un démodulateur de signaux PSK. Le décalage de porteuse induit par l'effet Doppler qui peut affecter éventuellement la liaison est acquis et entretenu par un module indépendant du démodulateur, le nombre de trajets tolérés est alors fixé à un maximum. Enfin les variations des paramètres du canal (gain et déphasage associés aux multitrajets) sont considérées comme négligeables par rapport à la durée d'un palier de la transmission en évasion de fréquence. Ces hypothèses permettent de simplifier les traitements de démodulation et reflètent la quasi-totalité des conditions de

2

transmission sur canal ionosphérique en évasion de fréquence pour une bande d'étalement des sauts variant typiquement de un mégahertz le jour à 500 kilohertz la nuit.

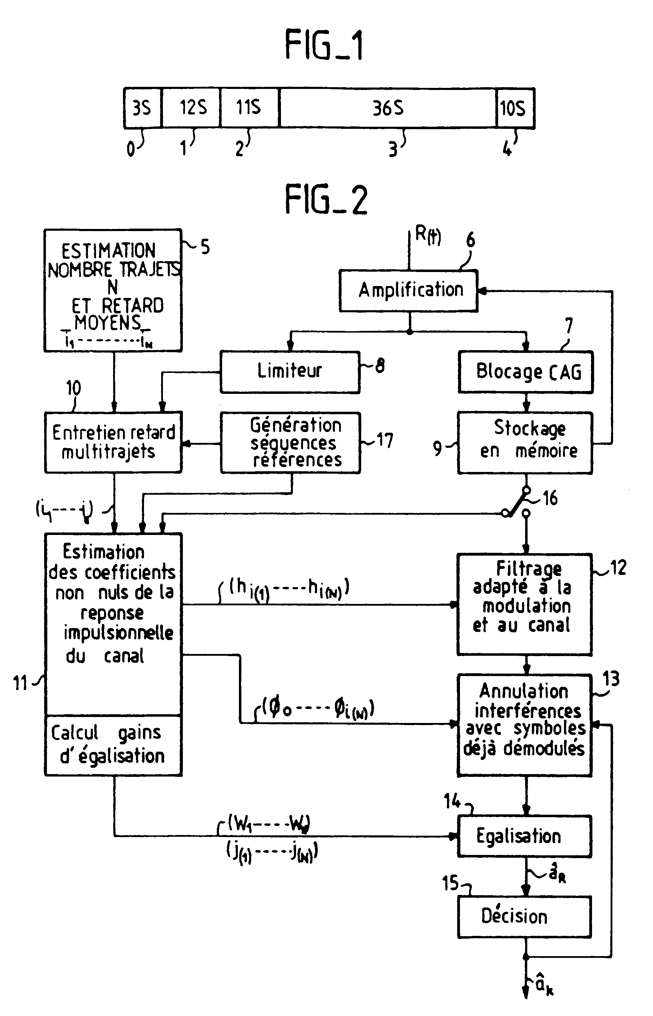

Une structure type d'un palier à transmission de données EVF est représentée à la figure 1. Cette structure comprend cinq champs référencés de 0 à 4. Le champ 0 a une longueur de trois symboles et représente un temps mort qui est le temps nécessaire à la commutation de synthétiseurs de fréquence, non représentés, du récepteur des signaux EVF sur la fréquence du palier. Le champ 1 a une longueur de 12 symboles et correspond au temps nécessaire à l'asservissement des boucles de contre-réaction des amplificateurs de réception du récepteur.

Le champ 2 a une longueur de onze symboles et permet la connaissance des caractéristiques du canal de transmission par le démodulateur. Les symboles contenus dans les champs 1 et 2 permettent au démodulateur d'entretenir la synchronisation.

Le champ 3 est constitué par un bloc d'informations composé de 36 symboles.

Enfin le champ 4 est un champ de garde de 10 symboles correspondant au décalage maximum qui peut être toléré entre les trajets extrêmes parcourus par les symboles sur le canal de transmission.

Les traitements qui sont représentés schématiquement par les blocs référencés de 1 à 17 sur la figure 2 et qui représentent les différentes phases du procédé selon l'invention interviennent après une phase de synchronisation représenté en 5 sur la figure 2 durant laquelle sont déterminés le nombre de trajets présents et leurs instants moyens d'arrivée dans un palier EVF. Durant la phase de synchronisation, le démodulateur du récepteur traite les symboles reçus sur des paliers longs dont la durée est fixée, dans l'exemple de réalisation qui suit, à trois fois la durée des paliers. De façon connue chaque palier contient des séquences de signaux de référence de type PN ou "pseudo Noise" connus du démodulateur du récepteur, et dont il n'est pas nécessaire de décrire plus en détail le fonctionnement pour la mise en oeuvre de l'invention. On rappelle cependant que les traitements s'effectuent habituellement palier par palier. Chaque séquence de signal reçue est corrélée, après être passée au travers d'un étage limiteur de démodulation, avec la séquence PN attendue. Chaque signal corrélé obtenu est un signal complexe comprenant une partie réelle et une partie imaginaire. Le module de chaque signal est élevé au carré pour être ensuite stocké dans une mémoire de façon à permettre un tri sur chaque palier complet des signaux contenus dans la mémoire et détecter l'instant d'échantillonnage du module qui a la valeur la plus grande parmi tous les autres modules des signaux stockés. C'est cet instant qui définit la prise de la synchronisation à condition que la valeur correspondante soit au dessus d'un seuil défini par une probabilité de fausse alarme prédéterminée. Pour obtenir une probabilité de non détection suffisamment faible il suffit d'augmenter le nombre de paliers de synchronisation. L'estimation du nombre des retards des multitrajets a lieu après la phase de synchronisation, et s'effectue de façon similaire. Une moyenne des résultats obtenus est alors calculée sur plusieurs paliers.

La détection des retards des multitrajets est ensuite obtenue par repérage des instants d'échantillonnage des valeurs extrêmes du module moyen de la fonction d'intercorrélation, élevée au carré, au-dessus d'un seuil prédéterminé.

Pour les communications de longue durée la phase de synchronisation peut être répétée régulièrement. Sur la figure 2 le signal $R(t)$ à démoduler est tout d'abord échantillonné, à l'étape 6, au rythme de trois échantillons par symbole. Il est ensuite acheminé en parallèle vers un circuit d'amplification 7 à contrôle automatique de gain et vers un circuit limiteur 8. La commande de contre-réaction est bloquée après un temps d'asservissement de 15 symboles suivant le début d'un palier EVF et les échantillons restants du palier sont stockés dans une mémoire 9 pour être traités ultérieurement. La sortie du circuit limiteur 8 alimente un module 10 dont la fonction est de préciser les retards des trajets détectés dans une fenêtre de 3 trois échantillons de part et d'autre de leur retard moyen estimé préalablement au cours de l'établissement de la synchronisation.

Le traitement de démodulation nécessite la connaissance des retards précis $i(1)$, $i(2)$ ... $i(N)$ des différents trajets détectés sur le palier EVF, ceux-ci étant estimés dans le bloc 10. Les coefficients complexes $h_{i(1)}$, $h_{i(2)}$ ... $h_{i(N)}$ représentant la réponse impulsionnelle du canal en fonction des indices $i(1)$, ... $i(N)$ sont déterminés dans le bloc 11 à partir des 33 premiers échantillons du palier qui suivent l'instant de blocage de la contre-réaction du circuit amplificateur 7.

La première étape du traitement de démodulation selon l'invention est représentée en 12. Elle débute par un filtrage adapté à la forme d'onde attendue. Ce filtrage consiste à effectuer une corrélation du signal par la forme d'onde attendue au moyen des coefficients $h_{(1)}$ ... $h_{i(N)}$ déterminés précédemment. Le rôle du filtrage adapté est d'optimiser le rapport signal à bruit en recentrant sur chaque symbole l'énergie dispersée par la modulation et lors de la transmission des symboles sur le canal. Le signal obtenu par l'opération de filtrage effectuée par le bloc 12 est affecté de deux types d'interférences inter-symboles qui sont les interférences issues des symboles déjà démodulés et les interférences des symboles non encore

3

démodulés.

Le bloc 13 suivant permet d'annuler le premier type d'interférence du fait que les caractéristiques du canal sont connues par les traitements effectués par le bloc 11 et du fait que les symboles démodulés sont également connus aux erreurs près. Le calcul de ces interférences et leur soustraction du signal à traiter sont effectués par le bloc représenté en 13.

Les interférences inter-symboles futures qui sont une conséquence du filtrage adapté effectué par le bloc 12 sont ensuite réduites par égalisation dans le bloc 14. Les coefficients de l'égaliseur compris dans le bloc 14 sont calculés à partir de l'estimation des caractéristiques du canal fournies par le bloc 11 et figées pour la durée du palier pour limiter sensiblement le volume des calculs. Une décision sur le caractère de vraisemblance des symboles démodulés par rapport aux symboles attendus est ensuite prise par le bloc 15 qui est couplé à la sortie du bloc d'égalisation 14.

Le bloc 16 assure l'aiguillage des 32 premiers symboles à destination du bloc 11 et celui des symboles suivants à destination du bloc de filtrage adapté 12. Le bloc 17 assure la génération des séquences de référence Sn nécessaires au bloc d'estima tion des coefficients non nuls de la réponse impulsionnelle du canal 11.

Parmi les paramètres du canal, les retards des trajets sont connus des blocs d'estimation 11. Cependant leur puissance et leur déphasage restent à déterminer. La connaissance de la position des coefficients non nuls de la réponse impulsionnelle du canal permet de limiter le nombre d'inconnues du problème et d'améliorer la qualité de leur estimation. En désignant par $x_n$ la séquence des échantillons reçus stockés après le blocage de la boucle de contrôle de gain automatique du circuit d'amplification 7, cette séquence est équivalente au produit de convolution de la séquence $s_n$ des échantillons émis, par les coefficients de $h_{i(j)}$ de la réponse impulsionnelle du canal, auquel s'ajoute des échantillons $b_n$ de bruit blanc gaussien. La relation correspondante s'écrit :

$$x_n = \sum_{j=1}^{N} h_{i(j)} \cdot s_{n-i(j)} + b_n \qquad (1)$$

où N désigne le nombre de trajets maximum estimable
et i(j) désigne les indices des coefficients non nuls de la réponse impulsionnelle du canal.

En retournant à la figure 1 et en désignant par $\bar{x}$ le vecteur formé par les n = 33 symboles de la séquence de synchronisation, la matrice transposée $\bar{x}^t$ s'écrit

$$\bar{x}^t = (x_1, x_2, \dots x_{33})$$

De façon similaire, la matrice transposée de la matrice des coefficients $h_{i(j)}$ s'écrit :

$$\bar{h}^t = (h_{i(1)}, h_{i(2)} \dots h_{i(N)})$$

et la matrice transposée de la matrice des coefficients de bruit s'écrit :

$$\bar{b}^t = (b_1, b_2, \dots b_{33})$$

En désignant par S la matrice formée de coefficients $S_{l,m}$ tels que $S_{l,m} = s_{l-i(m)}$

avec $1 \leq l \leq 33$ et $1 \leq m \leq N$

les coefficients de la matrice h peuvent être estimés par la relation :

$$S.\bar{h} = \bar{x} + \bar{b}$$

Les coefficients de la matrice $\bar{h}$ s'obtiennent alors en minimisant une relation $F(\bar{h})$ de la forme
$F(h) = \bar{b}^{*t}.\bar{b} = (S\bar{h}-\bar{x})^{*t}(S\bar{h}-\bar{x})$, où * est l'opérateur de conjugaison des nombres complexes, en utilisant par exemple l'algorithme connu sous les désignations "d'algorithme des gradients conjugués" ou encore "Conjugate Gradiant Method" décrit par M.E. Polak dans le livre intitulé "Computationnal Methods in Optimization, Academic Press, New York, San Francisco, London.

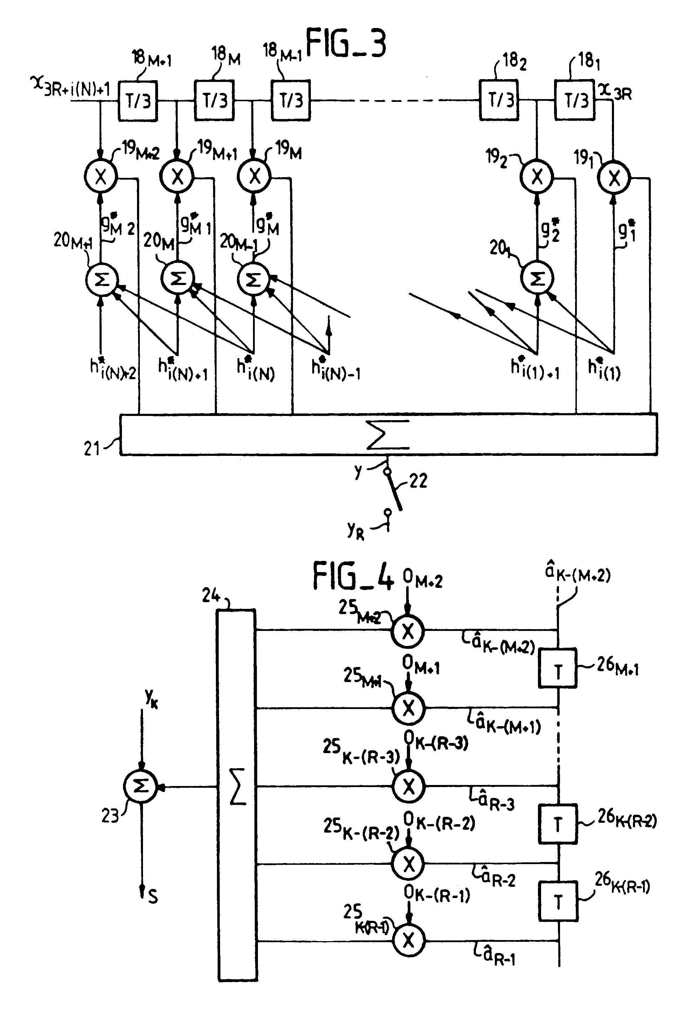

Un mode de représentation du bloc de filtrage adapté à la modulation et au canal est représenté à la figure 3. En adoptant la notation $M = i(N) + 2$ celui-ci se compose de $M + 1$ registres référencés de $18_1$ à $18_{M+1}$, de $M + 2$ circuits multiplieurs référencés de $19_1$ à $19_{M+2}$, de $M + 1$ circuits additionneurs référencés respectivement de $20_1$ à $20_{M+1}$, d'un circuit additionneur 21 et d'un circuit d'échantillonnage 22. Les circuits multiplieurs $19_1$ à $19_{M+2}$ possèdent respectivement une première entrée et une deuxième entrée d'opérande reliées respectivement aux sorties des registres $18_1$ à $18_{M+1}$ et aux sorties des circuits additionneurs $20_1$ à $20_{M+1}$. Les sorties des circuits multiplieurs $19_1$ à $19_{M+2}$ sont reliées respectivement aux entrées d'opérande du circuit additionneur 21. La sortie du circuit additionneur 21 est échantillonnée à la période T symbole par un circuit échantillonneur 22. Ce circuit effectue la convolution de la réponse impulsionnelle conjuguée du canal par un peigne formé par 3 impulsions de diracs, puis la corrélation de la séquence $X_n$ par le produit de convolution obtenu. La sortie y du filtre est ensuite décimée pour ramener la fréquence d'échantillonnage au rythme symbole $1/T$. En sortie de l'échantillonneur 22, le symbole en cours de démodulation $Y_R$ comporte des interférences dues aux symboles précédents $a_{R-1}$ $a_{R-2}$ etc... d'une part, et aux symboles suivants $a_{R+1}$ $a_{R+2}$ etc... d'autre part, ces dernières interférences étant générées par le filtrage adapté anti-causal. Ces deux familles d'interférences sont traitées séparément par les blocs 13 et 14 de la figure 2. En reprenant les notations précédentes chaque symbole $Y_R$ obtenu en sortie du filtre adapté de la figure 3 vérifie une relation de la forme :

$$Y_R = \sum_{K=-(M+2)}^{-1} \emptyset_K \cdot a_{R-K} + \emptyset_0 a_R + \sum_{K=1}^{(M+2)} \emptyset_K \cdot a_{R-K} + n_R \quad (2)$$

où :

- $a_{R-K}$ désigne le symbole de rang R-K dans la séquence des symboles émis
- $\emptyset_K$ désigne l'autocorrélation complexe de la forme de l'onde attendue, la forme attendue étant définie par le produit de convolution de l'impulsion de phase (rectangle de durée T) et de la réponse impulsionnelle h du canal.

et :

$n_K$ désigne le bruit obtenu en sortie du filtre adapté.

Dans la relation (2)

$$\emptyset_K = \sum_{j=1}^{M+2} g_j^* \cdot g_{j+K}$$

où

$$g_j = \sum_{K=0}^{2} h_{j-K}$$

représente les termes obtenus en sortie des circuits additionneurs $20_1$ à $20_{M+1}$.

Le dispositif qui est représenté à la figure 4 permet l'annulation du premier terme de la famille d'interférence. Ce terme correspond au premier terme de l'expression (2) qui est à droite du signe égal. Le dispositif se compose d'un circuit soustracteur 23, d'un circuit sommateur 24 dont les entrées d'opérande sont reliées aux sorties de circuits multiplieurs référencés $25_{K-(R-1)}$ à $25_{M+2}$ et de registres référencés de $26_{K-(R-1)}$ à $26_{M+1}$ et échantillonnés au rythme symbole $1/T$. Les circuits multiplieurs 25 possèdent chacun deux entrées d'opérande recevant, l'une le signal d'autocorrélation de la forme d'onde attendue $\emptyset(k)$ et l'autre la séquence des symboles reçus $a_{R+K}$. Pour chaque symbole à démoduler la sortie S du circuit soustracteur 23 génère des signaux $z_R$, $z_{R+j(1)}$ ... $z_{R+j(N)}$ tels que :

$$Z_R = Y_R - \sum_{K=1}^{M+2} \emptyset_K \cdot a_{R-K} \qquad (3)$$

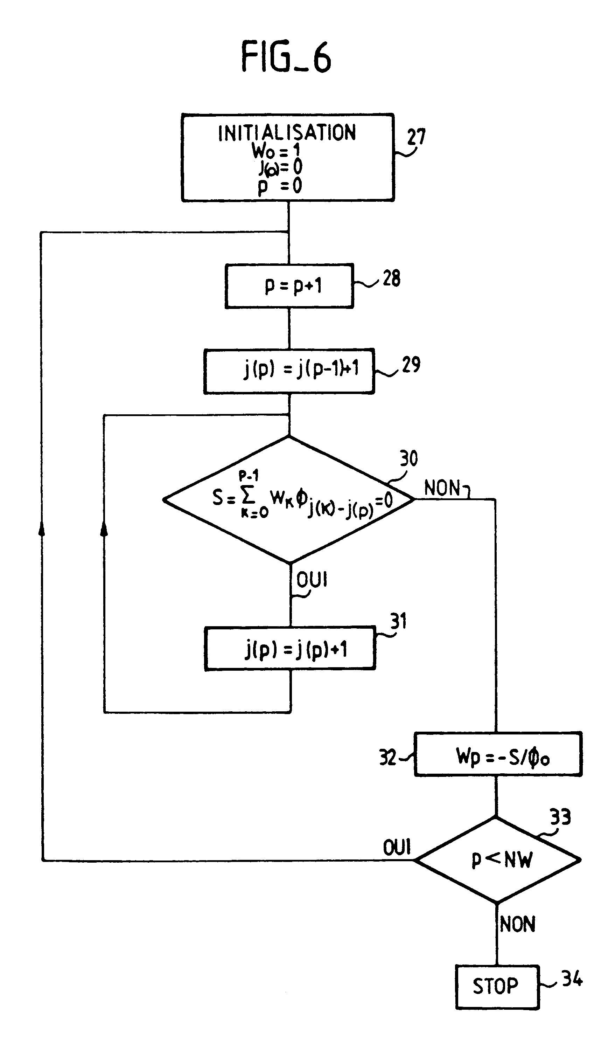

Les gains du circuit d'égalisation w1, w2, ... w(NW) sont déterminés à l'aide du circuit représenté à la figure 5. Ce circuit comprend un circuit sommateur 27 relié par ses entrées d'opérandes à des circuits multiplieurs $28_1$ à $28_{Nw}$ possédant chacun une première et une deuxième entrée d'opérande. Les premières entrées d'opérande reçoivent respectivement les coefficients représentant les gains de l'égaliseur et les deuxièmes entrées d'opérande sont reliées respectivement à des registres à décalage notés respectivement de $29_1$ à $29_{Nw-1}$ la sortie du circuit d'égalisation est figurée par la sortie du circuit sommateur 27 et fournit un signal de la forme

$$a_R = Z_R + \sum_{K=1}^{Nw} W_K \cdot Z_{R+j(K)} + n'_R$$

ou encore

$$a_R = \sum_{i'=0}^{j(Nw)+i(N)} a_{R+i'} \cdot \left( \sum_{K'=0}^{Nw} W_K \cdot \emptyset_{-j(K')+i'} \right) \qquad (4)$$

où $w_k$ désigne la suite des coefficients non nuls de l'égaliseur
$j(k)$ désigne la suite des indices correspondant aux valeurs $w_k$
$n'_R$ désigne le bruit en sortie de l'égaliseur.

L'annulation des interférences dues aux symboles $a_{R+1}$ $a_{R+2}$ est obtenue en annulant les coefficients de ces symboles dans l'équation (4). Cette condition est décrite par la relation :

$$S = \sum_{K=0}^{Nw} W_K \cdot \emptyset_{-j(K)+i} = 0 \qquad (5)$$

pour $I \leq i \leq j(Nw) + i (N)$

En négligeant dans la relation (5) les termes en $\emptyset(j)$ pour les coefficients j supérieurs à zéro, la relation (5) peut s'écrire sous la forme d'une matrice triangulaire. Cette approximation entraîne des erreurs de second ordre sur l'estimation des coefficients qui ne pénalisent cependant pas de façon décisive les performances et qui par contre apportent une diminution sensible du volume des calculs. Sous couvert de ces hypothèses, l'algorithme de résolution du système qui permet de déterminer les coefficients non nuls de l'égaliseur $w_1$ $w_2$ et $w_{Nw}$ et de leurs indices $j(1)$ $j(2)$ et $j(Nw)$ est alors décrit par les étapes 27 à 34 de l'organigramme de la figure 6. Sur cet organigramme l'étape 27 permet d'initialiser l'algorithme. Cette initialisation a lieu en donnant au coefficient w(0) la valeur 1 correspond à l'indice J(0) = 0 et à l'indice p d'incrémentation des coefficients à zéro. L'indice p est augmenté d'une unité à l'étape 28 pour chaque nouvelle valeur de coefficient à déterminer et l'indice j(p) est diminué d'une unité à l'étape 29. L'étape 30 consiste à calculer la valeur de S par la relation (5). Si à l'étape 30 la relation S est nulle l'indice j(p) est augmenté d'une unité à l'étape 31. Par contre si à l'étape 30 la somme S n'est pas nulle un coefficient wp = $-S/\emptyset_0$ est calculé à l'étape 32. Si à l'étape 33, le nombre p est inférieur au nombre Nw le calcul est repris à partir de l'étape 28. Par contre si à l'étape 33 le nombre p est supérieur ou égal à Nw alors le calcul des coefficients de l'égaliseur est arrêté.

La décision finale qui a lieu dans le bloc 15 de la figure 2 est prise parmi les symboles possibles suivant un critère de maximisation de la fonction de vraisemblance suivante :

$f(\hat{a}_j) = (\hat{a}_j - \tilde{a}_R)^* \cdot (\hat{a}_j - \tilde{a}_R) = d^2(a_j, a_R)$     (6)

où d désigne la distance euclidienne entre les symboles $a_j$ et $a_R$.

où ã(r) désigne la décision pondérée fournie par l'égaliseur et â(j) désigne une des décisions possibles.

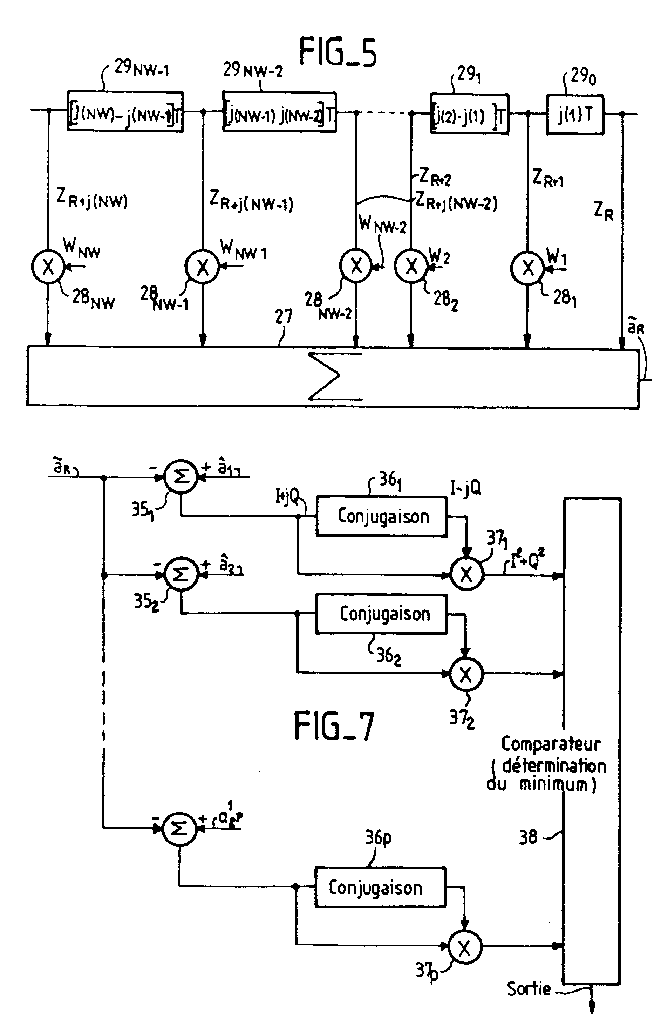

Un circuit correspondant est décrit à la figure 7. Ce circuit comprend un ensemble de circuits soustracteurs $35_1$ à $35_p$ disposant chacun d'une première entrée d'opérande sur laquelle est appliquée le signal $a_R$ provenant du circuit égaliseur de la figure 6 et une deuxième entrée d'opérande sur laquelle est appliquée respectivement la suite des symboles possibles $a_1$ à $a_2p$. La sortie de chacun des circuits soustracteurs $35_1$ à $35_p$ est reliée respectivement d'une part, à l'entrée d'un opérateur de conjugaison de nombres complexes $36_1$ à $36_p$ et d'autre part, à une première entrée d'opérande des circuits multiplieurs $37_1$ à $37_p$. La deuxième entrée d'opérande des circuits multiplieurs $37_1$ à $37_p$ est reliée à la sortie des opérateurs de conjugaison de nombres complexes $36_1$ à $36_p$. Les sorties des circuits multiplieurs $37_1$ à $37_p$ sont reliées respectivement à un circuit comparateur 38 qui détermine sur sa sortie le symbole dont l'énergie est la plus faible et le résultat est appliqué sur les entrées de registres à décalage 26 du circuit représenté à la figure 4.

Le mode de réalisation du dispositif qui vient d'être décrit n'est pas unique et il va de soi par exemple qu'un mode de réalisation équivalent peut également être obtenu à l'aide d'une architecture comprenant un microprocesseur de traitement du signal convenablement programmé pour exécuter les différentes étapes du procédé représenté à la figure 2, le microprocesseur étant relié au moyen d'un bus de données à un démodulateur, à une mémoire de programmes et à mémoire de donnée, le démodulateur étant un démodulateur de signaux PSK composé de façon connue par deux circuits transposeurs de fréquence, un synthétiseur de fréquence local, un circuit de déphasage, de deux filtres, de deux convertisseurs analogiques numériques et d'un circuit d'interface.

## Revendications

1. Procédé de démodulation de données numériques transmises en évasion de fréquence sur un canal de transmission ionosphérique caractérisé en ce qu'il consiste :
   - à estimer le nombre de trajets par leurs retards moyens dans la bande d'étalement des signaux en évasion de fréquence
   - à effectuer un premier filtrage (12) sur les échantillons du palier reçu adapté à la modulation et au canal,
   - à effectuer un deuxième filtrage consistant :
     - à annuler (13) les interférences dues aux symboles déjà démodulés,
     - à annuler (14) les interférences dues aux symboles non encore démodulés
       et à déterminer (15) à partir du résultat du deuxième filtrage le symbole émis le plus probable.

2. Procédé selon la revendication 1 caractérisé en ce qu'il consiste à repérer (5) les retards des trajets dans une fenêtre temporelle de dimension égale à celle de la durée de trois échantillons de part et d'autre de leur retard moyen estimé.

3. Procédé selon l'une quelconque des revendications 1 et 2 caractérisé en ce qu'il consiste à stocker (9) en mémoire les échantillons de chaque palier reçu.

4. Procédé selon l'une quelconque des revendications 1 à 3 caractérisé en ce qu'il consiste pour effectuer le premier filtrage à effectuer une corrélation de la séquence des échantillons par forme d'onde attendue, la forme d'onde attendue étant obtenue par le produit de convolution (19) d'un signal rectangulaire ayant la durée d'un symbole avec la réponse d'un filtre ayant pour réponse impulsionnelle celle du canal de transmission.

5. Procédé selon la revendication 4 caractérisé en ce qu'il consiste pour annuler les interférences dues aux symboles déjà démodulés, à effectuer une autocorrélation de la forme d'onde attendue avec la séquence des symboles déjà reçus pour sous-traire (23) celle-ci du résultat de la corrélation obtenu par le premier filtrage.

6. Procédé selon la revendication 5 caractérisé en ce qu'il consiste pour annuler les interférences dues aux symboles non encore démodulés, à effectuer une égalisation (14) du résultat donné par l'autocorrélation en fonction de gains (11) déterminé par une estimation des coefficients non nuls de la réponse impulsionnelle du canal.

7. Procédé selon la revendication 6 caractérisé en ce qu'il consiste pour déterminer, à partir des résultats du deuxième filtrage (13, 14), les symboles émis les plus probables, à comparer (15) la distance euclidienne de chaque symbole fourni par l'égalisation aux différents symboles possibles.

8. Dispositif de démodulation de données numériques transmises en évasion de fréquence sur un canal de transmission ionosphérique caractérisé en ce qu'il comprend un démodulateur de signaux PSK couplé à une unité de traitement convenablement programmée pour exécuter les étapes du procédé selon l'une quelconque des revendications 1 à 7.

**Claims**

1. Method of demodulating digital data transmitted by <u>frequency avoidance</u> on an ionospheric transmission channel characterised in that it consists in:
   - estimating the number of paths by their average delays within the bandspread of the frequency-avoidance signals
   - performing a first filtering (12) on the samples of the received plateau matched to the modulation and to the channel,
   - performing a second filtering consisting in:
     - cancelling out (13) the interferences due to the symbols already demodulated,
     - cancelling out (14) the interferences due to the symbols not yet demodulated
       and determining (15) the most probable transmitted symbol from the result of the second filtering.

2. Method according to Claim 1 characterised in that it consists in locating (5) the delays of the paths in a time window of dimension equal to that of the duration of three samples either side of their estimated average delay.

3. Method according to either one of Claims 1 or 2, characterised in that it consists in storing (9) in memory the samples of each plateau received.

4. Method according to any one of Claims 1 to 3, characterised in that it consists, in order to perform the first filtering, in performing a correlation of the sequence of samples by expected waveform, the expected waveform being obtained through the convolution product (19) of a rectangular signal having the duration of one symbol with the response of a filter whose impulse response is that of the transmission channel.

5. Method according to Claim 4, characterised in that it consists, in order to cancel out the interferences due to the symbols already demodulated, in performing an autocorrelation of the expected waveform with the sequence of symbols already received, in order to subtract (23) this sequence from the result of the correlation obtained through the first filtering.

6. Method according to Claim 5, characterised in that it consists, in order to cancel out the interferences due to the symbols not yet demodulated, in performing an equalisation (14) of the result given by the autocorrelation as a function of gains (11), which result is determined through an estimation of the non-zero coefficients of the impulse response of the channel.

7. Method according to Claim 6, characterised in that it consists, in order to determine the most probable transmitted symbols from the results of the second filtering (13, 14), in comparing (15) the Euclidian distance of each symbol delivered by the equalisation to the various possible symbols.

8. Device for demodulating digital data transmitted by frequency avoidance on an ionospheric transmission channel, characterised in that it comprises a PSK signal demodulator coupled to a processing unit suitably programmed to execute the steps of the method according to any one of Claims 1 to 7.

EP 0 323 927 B1

**Patentansprüche**

1. Verfahren zum Demodulieren von über einen ionosphärischen Übertragungskanal nach dem Frequenzsprungverfahren übertragenen digitalen Daten, **dadurch gekennzeichnet,** daß es darin besteht:

   - die Anzahl der Übertragungsstrecken durch ihre mittleren Verzögerungszeiten im Variationsband der Frequenzsprungsignale abzuschätzen,
   - eine erste Filterung (12) der Abtastwerte der empfangenen Stufe mit Anpassung an die Modulation und an den Kanal durchzuführen;
   - eine zweite Filterung durchzuführen, die darin besteht:
     - daß die Interferenzen beseitigt werden (13), die auf bereits demodulierte Symbole zurückzuführen sind,
     - daß die Interferenzen beseitigt werden (14), die auf noch nicht demodulierte Symbole zurückzuführen sind,

   und

   - anhand des Ergebnisses der zweiten Filterung das ausgesendete Symbol mit der höchsten Wahrscheinlichkeit zu bestimmen (15).

2. Verfahren nach Anspruch 1, **dadurch gekennzeichnet,** daß es darin besteht, daß die Verzögerungszeiten der Übertragungswege in einem Zeitfenster markiert werden (5), dessen Dimension gleich der Dimension der Dauer von drei Abtastwerten beiderseits ihrer mittleren geschätzten Verzögerungszeit ist.

3. Verfahren nach einem der Ansprüche 1 und 2, **dadurch gekennzeichnet,** daß es darin besteht, die Abtastwerte jeder empfangenen Stufe in einem Speicher abzuspeichern (9).

4. Verfahren nach einem der Ansprüche 1 bis 3, **dadurch gekennzeichnet,** daß es darin besteht, für die Durchführung der ersten Filterung eine Korrelation der Folge von Abtastwerten mittels einer gedämpften Wellenform durchzuführen, wobei die Form der gedämpften Welle durch das Produkt der Faltung (19) eines Rechtecksignals mit der Dauer eines Symbols mit der Antwort eines Filters erhalten wird, das als Impulsantwort die des Übertragungskanals hat.

5. Verfahren nach Anspruch 4, **dadurch gekennzeichnet,** daß es darin besteht, zum Beseitigen der auf bereits demodulierte Symbole zurückzuführenden Interferenzen eine Autokorrelation der gedämpften Wellenform mit der Folge der bereits empfangenen Symbole durchzuführen, um diese vom Ergebnis der durch die erste Filterung erhaltenen Korrelation zu subtrahieren (23).

6. Verfahren nach Anspruch 5, **dadurch gekennzeichnet,** daß es darin besteht, zum Beseitigen der auf noch nicht demodulierte Symbole zurückzuführenden Interferenzen eine Egalisierung (14) des durch die Autokorrelation erhaltenen Ergebnisses in Abhängigkeit von Verstärkungsfaktoren durchzuführen (11), die durch eine Abschätzung der von Null abweichenden Koeffizienten der Impulsantwort des Kanals bestimmt werden.

7. Verfahren nach Anspruch 6, **dadurch gekennzeichnet,** daß es darin besteht, für die Bestimmung der ausgesendeten Symbole mit der höchsten Wahrscheinlichkeit aus den Ergebnissen der zweiten Filterung (13, 14) die euklidische Entfernung jedes durch die Egalisierung gelieferten Symbols mit verschiedenen möglichen Symbolen zu vergleichen (15).

8. Vorrichtung zum Demodulieren von über einen ionosphärischen Übertragungskanal nach dem Frequenzsprungverfahren übertragenen digitalen Daten, **dadurch gekennzeichnet,** daß sie einen Demodulator für PSK-Signale enthält, der an eine Verarbeitungseinheit angeschlossen ist, die in geeigneter Weise für die Durchführung der Schritte des Verfahrens nach einem der Ansprüche 1 bis 7 programmiert ist.

9

# FIG_1

| 3S | 12S | 11S | 36S | 10S |
|----|-----|-----|-----|-----|
| 0 | 1 | 2 | 3 | 4 |

# FIG_2

FIG_3

FIG_4

# FIG_6

INITIALISATION
$W_0 = 1$
$j(0) = 0$
$p = 0$    27

$p = p+1$    28

$j(p) = j(p-1)+1$    29

$S = \sum_{k=0}^{P-1} W_K \phi_{j(K)-j(p)} = 0$    30    NON

OUI

$j(p) = j(p)+1$    31

32    $W_p = -S/\phi_0$

$p < NW$    33

OUI

NON

STOP    34

# FIG_5

# FIG_7

Comparateur
( détermination
du minimum )

Sortie